(19)

Europäisches
Patentamt
European
Patent Office
Office européen
des brevets

(11) **EP 1 762 957 A1**

(12) **EUROPEAN PATENT APPLICATION**

(43) Date of publication:
**14.03.2007 Bulletin 2007/11**

(51) Int Cl.:
***G06F 21/00*** *(2006.01)*

(21) Application number: **06254754.2**

(22) Date of filing: **13.09.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **13.09.2005 US 716884 P**
**01.03.2006 US 366171**

(71) Applicant: **Cloudmark, Inc**
**San Francisco, CA 94107 (US)**

(72) Inventor: **Abad, Christopher**
**San Francisco, CA 94105 (US)**

(74) Representative: **McLeish, Nicholas Alistair**
**Maxwell et al**
**Boult Wade Tennant**
**Verulam Gardens**
**70 Gray's Inn Road**
**London WC1X 8BT (GB)**

(54) **Signature for executable code**

(57)     Methods for generating a signature for executable code are described. An entry address for executable code is determined. Starting at the entry address, the method steps through the executable code, discarding a first type of instruction. Moreover, at least one type of branch instruction is followed but discarded. A mnemonic code listing is created by emitting into mnemonic form instructions not discarded until an ending condition is reached. The mnemonic code listing is processed to create a signature associated with the executable code. Lastly, the signature is analyzed to classify the executable code into one of a set of predetermined categories.

**FIG. 4**

EP 1 762 957 A1

**Description**

FIELD

Embodiments of the invention relate to computer security. In particular, embodiments of the invention relate to a signature for executable code.

BACKGROUND

Protecting computer systems from hostile or malicious attacks is challenging. Although it is possible to authenticate authorized users with passwords, trusted users themselves may endanger the system and network's security by unknowingly running programs that contain malicious instructions such as "viruses," "Trojan horses," "malicious macros," "malicious scripts," "worms," "spying programs" and "backdoors." A computer virus is a program executable that replicates by attaching itself to other programs. A Trojan horse is a program that in a general way does not do what the user expects it to do, but instead performs malicious actions such as data destruction and system corruption. Macros and scripts are programs written in high-level languages, which can be interpreted and executed by applications such as word processors, in order to automate frequent tasks. Because many macro and script languages require very little or no user interaction, malicious macros and scripts are often used to introduce viruses or Trojan horses into the system without user's approval. A worm is a program that, like a virus, spreads itself. But unlike viruses, worms do not infect other host programs and instead send themselves to other users via networking means such as electronic mail. Spying programs are a subtype of Trojan horses, secretly installed on a victim computer in order to send out confidential data and passwords from that computer to the person who put them in. A backdoor is a secret functionality added to a program in order to allow its authors to crack or misuse it, or in a general way exploit the functionality for their own interest.

All of the above programs can compromise computer systems and a company's confidentiality by corrupting data, propagating from one file to another, or sending confidential data to unauthorized persons, in spite of the user's will. Different techniques have been created to protect computer systems against malicious programs.

Signature scanners detect viruses by using a pre-defined list of "known viruses." They scan each file for virus signatures listed in their known virus database. Each time a new virus is found, it is added to that database. Regularly updating an list of known viruses is a heavy task for both the single-user and the network administrator and it leaves an important security gap between updates. Moreover, this approach is inherently impractical, time-consuming, costly, and always a step behind the virus creators.

Virus authors began to produce mutations in pre-existing viruses. By simply re-ordering the executable instruction code, a different signature was produced for the mutated version of the virus. This new signature is unrecognizable to the virus scanner when compared to the database of known signatures.

In essence, an encrypted virus consists of a virus decryption routine and an encrypted virus body. If a user launches an infected program, the virus decryption routine first gains control of the computer, then decrypts the virus body. Next, the decryption routine transfers control of the computer to the decrypted virus.

An encrypted virus infects programs and files as any simple virus does. Each time it infects a new program, the virus makes a copy of both the decrypted virus body and its related decryption routine, encrypts the copy, and attaches both to a target. To encrypt the copy of the virus body, an encrypted virus uses an encryption key that the virus is programmed to change from infection to infection. As this key changes, the re-ordering of the virus body makes the virus appear different from infection to infection.

Instruction re-ordering may occur in the context of functionally equivalent instructions. If an instruction in a program adds 5 plus 2, this is functionally the same as a mutated program code, which adds 2 plus 5. However, the program code and the mutation will produce different signatures. This makes it extremely difficult for anti-virus software to search for a virus signature extracted from a consistent virus body.

Another defense to the current anti-virus schemes is the insertion of non-operation (NOP) instructions in the program code. Again, this type of mutation can defeat a signature scanning scheme by producing an unrecognized signature. With no fixed signature to scan for, no two infections look alike.

SUMMARY

Methods for generating a signature for executable code are described. An entry address for executable code is determined. Starting at the entry address, the method steps through the executable code, discarding a first type of instruction. Moreover, at least one type of branch instruction is followed but discarded. A mnemonic code listing is created by emitting into mnemonic form instructions not discarded until an ending condition is reached. The mnemonic code listing is processed to create a signature associated with the executable code. Lastly, the signature is analyzed to classify the executable code into one of a set of predetermined categories.

Other features and advantages of the present invention will be apparent from the accompanying drawings and from the detailed description that follows below.

BRIEF DESCRIPTION OF THE DRAWINGS

Embodiments of the present invention are illustrated by way of example and not limitation in the figures of the accompanying drawings, in which like references indicate similar elements and in which:

**Figure 1** shows a file structure.

**Figure 2A** is a flow diagram of a process by which the signature system verifies an input.

**Figure 2B** is a flow diagram of a process by which the signature system locates an entry point within an executable file.

**Figure 3A** is a flow diagram of a process by which the signature system extracts a signature source and generates a signature.

**Figure 3B** is a flow diagram of an embodiment of a process by which an end condition terminates the creation of entries in a mnemonic code listing.

**Figure 4** illustrates one embodiment of the present invention for extracting a signature source.

**Figure 5** illustrates an electronic communication system implementing an embodiment of the present invention.

DETAILED DESCRIPTION

Embodiments of a method for generating a signature for executable code are described herein. For one embodiment, the computerized method begins with determining an entry address for the executable code and stepping through the executable code, starting at the entry address. To locate the entry address, an input is verified as a valid executable and the entry point within the executable is located. An instruction pointer points to a current instruction. The current instruction is disassembled into a mnemonic code. If the current instruction is a first type of instruction, the current instruction is discarded. For one embodiment, a first type of instruction is an instruction that when added to the program code, does not substantially alter the execution of the program code.

Additionally, at least one type of branch instruction is followed but discarded. For one embodiment, a selective branch instruction, such as a near relative jump, is followed by setting the instruction pointer to the target of the selective branch instruction and the selective branch instruction is discarded. Moreover, a mnemonic code listing is created by emitting in mnemonic form the instructions that were not discarded. This listing is created until an ending condition is reached. A first ending condition is the creation of a finite number of mnemonic entries of the mnemonic code listing. A second ending condition is exceeding a boundary of the executable code. A third ending condition is pointing by an instruction pointer to an already disassembled instruction offset.

After an ending condition is satisfied, the mnemonic code listing is the signature source for the executable code. The mnemonic code listing is processed to create a signature associated with the executable code. For one embodiment, processing includes applying a hash function to the signature source, or list of emissions. Hashing the list of emissions creates a signature that is associated with the digital file. The signature is analyzed to classify the executable code into one of a set of predetermined categories. An exemplary category is malicious code.

An intended advantage of this embodiment is to extract a signature source that is free from artifacts of various mutations in the executable code. Another intended advantage of this embodiment is to calculate a consistent signature among mutated versions of an executable code.

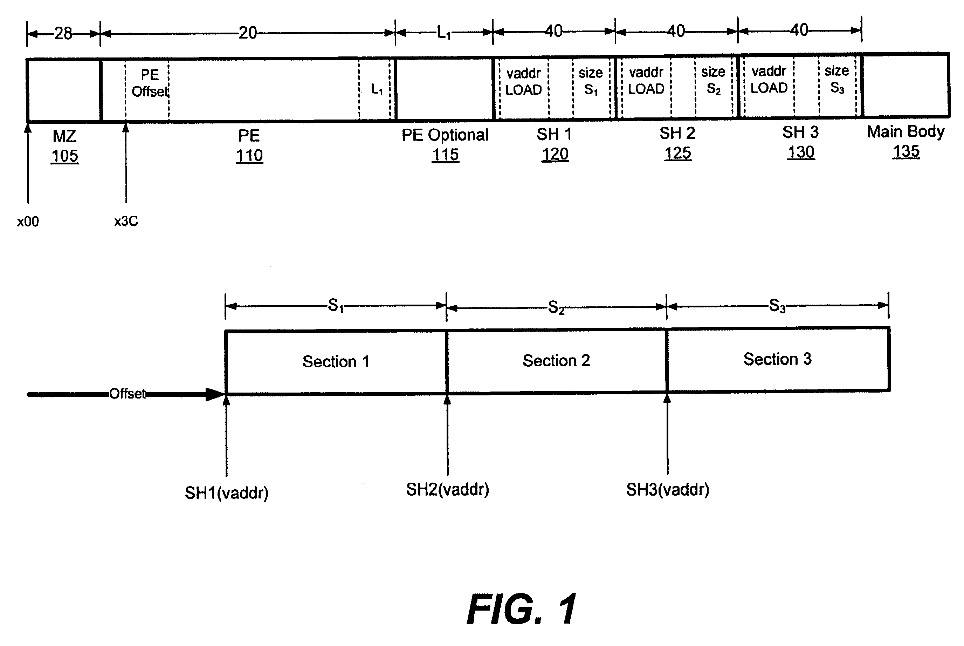

**FIG.1** shows a file structure. Most executable files include headers that contain information used to set a computer environment upon which the executable file will run. Moreover, the headers cause different portions of the executable file to be placed in memory of the computer, which enables the program to run. A Disk Operating System (DOS) executable file generally includes an MZ Header 105, a PE Header 110, a PE Optional Header 115, numerous Section Headers 120-130, and a main body 135.

An MZ header 105, named after Microsoft programmer Mark Zbikowski, is a binary file format header still present in all Windows executables out of legacy support. Generally, the initials 'MZ' appear in ASCII in the first two bytes, starting at offset $0 \times 00$, of a DOS executable file. An exemplary structure of an MZ Header 105 is as follows, with each field in the MZ Header being in little-endian ordering:

MZ HEADER

| 'M' | 'Z' | LastBlockLen |
|-----|-----|--------------|
| BlockCount | | RelocCount |
| HeaderPCount | | MinXParagraphs |

(continued)

| 'M' | 'Z' | LastBlockLen |
|---|---|---|
| MaxXParagraphs | | InitialSS |
| Initial SP | | Checksum |
| InitialIP | | InitialCS |
| RelocTableoffsetl | | OverlayNum |
| const char[2] signature = { 'M', 'Z' };<br>u_int17_t bytes_in_last_block;<br>u_int16_t blocks_in_file;<br>u_int16_t num_relocs;<br>u_int16_t header_paragraphs;<br>u_int16_t min_extra_paragraphs;<br>u_int16_t max_extra_paragraphs;<br>u_int16_t ss;<br>u_int16_t sp;<br>u_int16_t checksum;<br>u_int16_t ip;<br>u_int16_t cs;<br>u_int16_t reloc_table_offset;<br>u_int16_t overlay_number; | | |

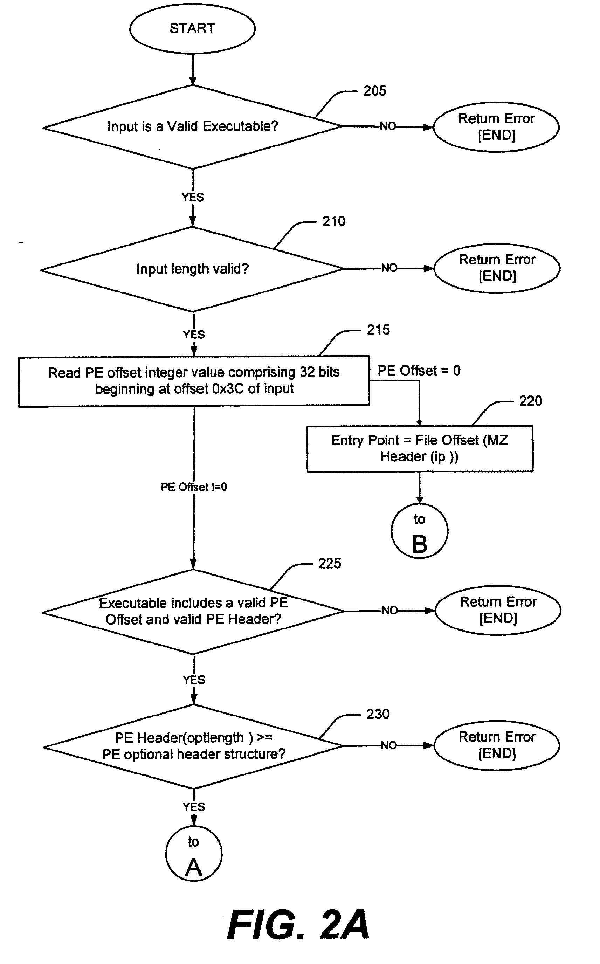

FIG.2A is a flow diagram of a process by which the signature system verifies an input. Beginning with decision block 205, the signature system determines if the input received is in a valid executable format.

In determining that the input is a valid executable, the signature system looks for a valid MZ Header 105 by parsing a two-byte pair, beginning at offset $0 \times 00$ of the input, and checking the input length. If the two-byte pair begins with "MZ" and the input length is at least 28 bytes in length, the input is in a valid executable format. Where both conditions are not met, a valid MZ Header 105 is not identified and the input is not in a valid executable format. In this case, the signature system returns an error and ends processing. Although a checksum field may exist in the MZ structure, it is not consistently used.

Where the input is in a valid executable format, processing continues to decision block 210, in which the signature system determines if a Portable Executable format header (PE Header) is present in the input.

In FIG. 1, the PE Header 110 is the main header for Portable Executable format binaries, based off of the Common Object File Format (COFF). Following the MZ Header 105, the PE Header 110 contains a field which indicates an entry point within the input where program execution begins. A structure of a PE Header is as follows:

```
PE HEADER
const char signature [4] = { 'P', 'E', '\0', '\0'}; u_int16_t cpu;
u_int16_t sections;
u_int32_t timestamp;
u_int32_t reserved1 [2];
u_int16_t optlength;
u_int16_t flags;
```

At block 210 of FIG. 2A, the signature system detects the presence of the PE Header by ensuring the input length is valid. In one embodiment a valid length is at least 64 bytes. If the input length is equal to or greater than 64 bytes, indicating the executable is long enough to contain a PE Header, processing continues to block 215. If not, an error is returned and processing ends.

At block 215, a PE offset integer value is read from the executable. In one embodiment, the PE offset is a 32 bit unsigned little-endian integer, beginning at offset 0x3C of the executable. At block 220, if the PE offset is zero (0), the entry point of the executable program code is taken to be the file offset of an ip field value of the MZ Header 105. In essence, the entry point = file offset (MZ Header (ip)). Where the entry point is taken from the MZ Header 105 because the PE offset is zero, the signature system continues to a disassembly process, beginning at block 305, using the entry point as an entry section offset parameter. The disassembly process is described in more detail below.

Where the PE offset does not equal zero, processing continues to block 225. Here the signature system determines if the executable includes a valid PE offset value and valid PE Header. The offset is validated by adding the value of the PE offset to a minimum PE Header length. In one embodiment, the minimum PE Header length/size is 20 bytes. If the sum of the PE offset value and the minimum PE Header length is greater than the executable length, the PE offset is invalid. In such a case, the PE Header is also deemed invalid as a valid PE Header could not possibly exist at the PE offset, which references code outside the scope of the executable. The signature system returns an error and ends processing.

Where the PE offset value is valid, the PE Header 110 is validated. Generally, a PE Header begins with the byte quadruplet "PE00," also called a PE Header magic number. In determining that the PE Header 110 is valid, the signature system parses four bytes. If the four bytes begin with "PE00," a valid PE Header magic number is found and the PE Header is extracted at the PE offset. Else, a valid PE Header is not identified; the signature system returns an error and ends processing.

Once the PE Header is validated, processing continues to block 230, in which a PE Optional Header 115 is located. PE Optional Header 115 contains the entry point of the executable in the PE Optional Header entry field. Once the PE Optional Header 115 is properly located, the signature system looks past the PE Optional Header 115 to the immediately following byte; this is the starting location of the first PE Section Header 120. The basic 64-byte format of the PE Optional Header 115 is as follows:

```
PE OPTIONAL HEADER
u_int16_t optmagic;
char linker [2[;
u_int32_t codesize;
u_int32_t reserved3[2];
u_int32_t entry;
u_int32_t reserved4[2];
u_int32_t base;
u_int32_t section_align;
u_int32_t file align;
u_int16_t osmajor;
u_int16_t osminor;
u_int16_t usermajor;
u_int16_t useminor;
u_int16_t submajor;
u_int16_t subminor;
u_int32_t reserved5;
u_int32_t image_size;
u_int32_t header size;
u_int32_t checksum;
u_int16_t subsystem;
u_int16_t dll_flags;
```

Generally, a PE Optional Header 115 directly follows the PE Header 110. The PE Optional Header 110 is a variable-length header. In one embodiment, the PE Optional Header length is defined by the PE Header 110. To validate the PE Optional Header 115, the value of the PE Header optlength field is checked to be at least as large as a size of the PE Optional Header structure. Thus, it is possible for the PE Header optlength field to be greater than the size of a PE Optional Header structure. Accordingly, if PE Header optlength is less than the size of the PE Optional Header structure, the signature system returns an error and ends processing. Windows executable files use an optional header of at least 64 bytes. As illustrated in FIG. 1, in one embodiment, the PE Header 110 optlength field "$L_1$" is equal to the size of the PE Optional Header 115.

Now that the executable file format is validated, the entry point is located. In one embodiment, an entry point is an entry section offset that points to executable code of a digital file. Moreover, the executable code is part of a digital program and a generated signature is further associated with the digital program.

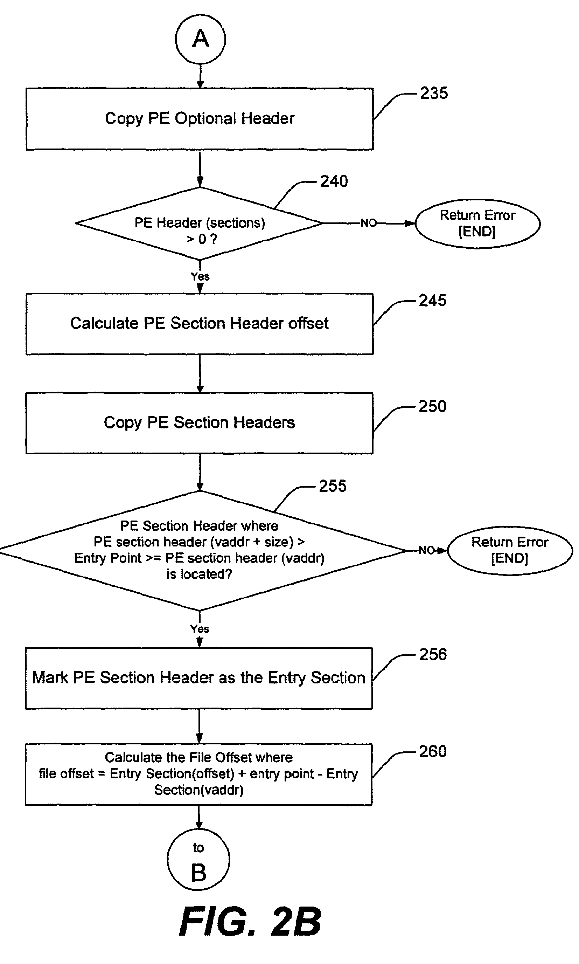

FIG. 2B is a flow diagram of a process by which the signature system locates an entry point within an executable file. Where the PE Header optlength is equal to or greater than the PE Optional Header structure, the relevant portion of the PE Optional Header structure is present. If the relevant portion is present, the PE Optional Header 115 directly following the PE Header 110 is copied at block 235 to a dynamically allocated section of memory in order to prevent tampering of the original. Additional fields of the PE Optional Header 115 may follow the basic structure of the PE Optional Header 115, but are ignored by the signature system.

Next, at block 240, the PE Header sections field is checked to be non-zero. The sections field indicates the number of PE Section Headers in the executable. If the PE Header sections field is zero, then there are no PE Section Headers and an error is returned.

Where the PE Header sections field is non-zero, an attempt to extract all PE Section Headers will be made. PE Section Headers begin directly after the PE Optional Header structure. As previously mentioned, because the PE Header optlength field may be greater than the PE Optional Header structure, the PE Optional Header structure may not end directly at the optional header length "L$_1$" defined in the PE Header 110. The signature system locates the end of the PE Optional Header 115, and looks past the PE Optional Header 115 to the immediately following byte. This byte is the start of the PE Section Headers.

One of the PE Section Headers contains the entry point code. Accordingly, it must be determined which of the PE Section Headers contains this code. In **FIG.1,** each PE Section Header 120-130 is of the same static size. For one embodiment, the size of each PE Section Header structure is 40 bytes. An exemplary PE Section Header structure is defined as:

PE SECTION HEADER
char name [8];
u_int32_t paddr;
u_int32_t vaddr;
u_int32_t size;
u_int32_t offset;
u_int32_t relptr;
u_int32_t lnnoptr;
u_int16_t nreloc;
u_int16_t nlnno;
u_int32_t flags;

The signature systems attempts to extract all PE Section Headers. At block 245, of **FIG. 2B**, the offset of the first PE Section Header (PE Section Header offset) is calculated. In one embodiment, the PE Header optlength field is equal to the size of the PE Optional Header 115 structure. Accordingly, the PE Section Header offset can be calculated by the summation of the PE offset, the size of the PE Header structure, and the PE Header optlength field.

At block 250, the section headers are copied to a dynamically allocated section of memory in order to prevent tampering with the original. Each PE Section Header is directly adjacent to the previous and there is one section header per section. The copy location starts at the PE Section Header offset. The total number of bytes that are to be copied can be calculated as the product of the total number of sections, as stated in the PE Header sections field, and the size of a PE Section Header structure.

At block 255, the signature system locates the particular PE Section Header which contains the entry point code. Each PE Section Header contains a LOAD address (an offset into the executable where the actual section begins) and the length of this actual section. In **FIG. 1,** the LOAD address is represented by the PE Section Header vaddr field. The section length is represented by the PE Section Header size field. In one embodiment, Section Header 120 size field is "S$_1$," Section Header 125 size field is "S$_2$," and Section Header 130 size field is "S$_3$,"

At block 255 of FIG. 2B, each PE Section Header is checked to see if the section it describes contains the entry point code. To accomplish this, the entry point of the executable is the value of the PE Optional Header entry field. The entry point is compared to each PE Section Header until a first PE Section Header containing the entry point is identified.

More specifically, for each PE Section Header 120-130, the signature system checks if the entry point is greater than or equal to a lower bound and less than an upper bound. The lower bound is the section header LOAD address (PE Section Header vaddr field). The upper bound is the summation of the section header LOAD address (PE Section Header vaddr field) and the section length (Section Header size field). Thus, the relationship between the entry point and the bounds may be represented as:

PE Section Header (`vaddr + size`) > Entry Point >= PE Section Header (`vaddr`)

If no PE Section Header is found to contain the entry point code, the signature system returns an error and ends processing.

At block 256, the first PE Section Header found to contain the entry point code, where the entry point is within the PE Section Header upper and lower range, is marked as the entry section. In one embodiment, multiple PE Section Headers may contain the entry point within its range, however, when the first PE Section Header is identified, the signature system ceases further comparisons. The entry section is the particular section of the executable, when loaded into memory, that would be entered by the entry point.

Once the entry section is found, the file offset is calculated at block 260. The entry section offset field defines the exact offset where the entry section is located within the executable. The file offset is calculated to be the entry section offset field plus the entry point minus the entry section vaddr field. This may be represented as:

$$\text{file offset} = \text{Entry Section (offset)} + \text{entry point} - \text{Entry Section (vaddr)}$$

The program code beginning at the file offset is mapped into a virtual memory space at the address that the computer would normally load that section. If no entry section offset is found, the signature system returns an error and ends processing.

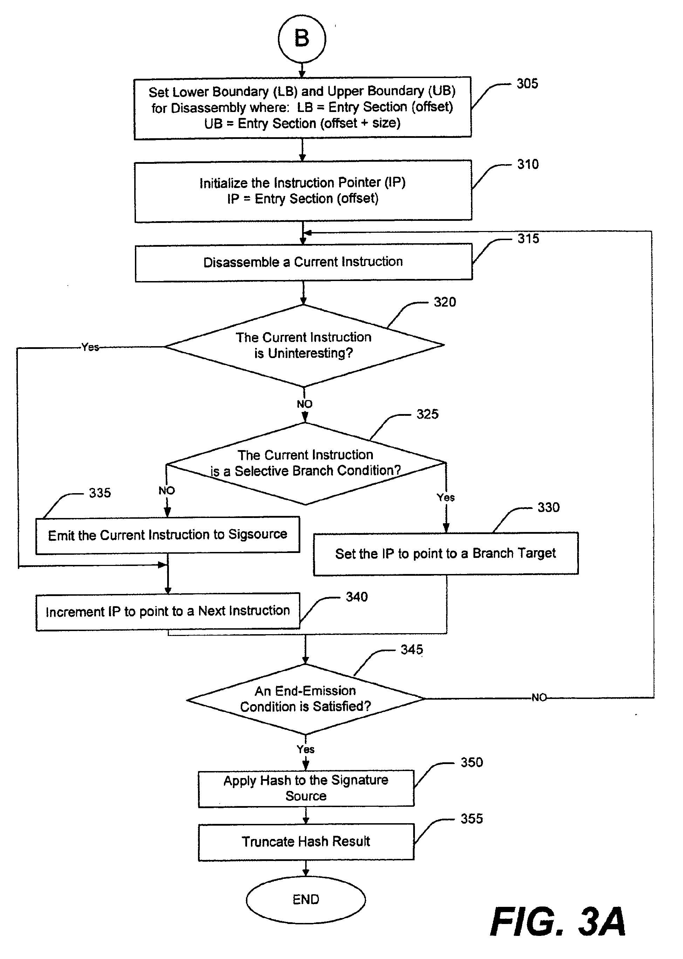

**Figure 3A** is a flow diagram of a process by which the signature system extracts a signature source ("sigsource") and generates a signature. A sigsource is a nmenomic code listing of a result of the extraction process.

Once a file offset has been calculated in block 260, processing continues to block 305. Here, lower and upper boundaries for disassembly addresses are set. The lower boundary is set to be the entry section offset field. The upper boundary is set to be the entry section offset field plus the entry section size field. If these boundaries are exceeded by an instruction pointer, sigsource extraction stops at block 345. Once sigsource extraction stops, all emitted information is the extracted signature source.

At block 310, an instruction pointer is initialized to the value of the entry section offset. The instruction pointer (IP) points to a current instruction. At block 315, the current instruction is disassembled, whereby the binary is translated into a human-readable mnemonic format such as source code represented in a symbolic assembly language. In one embodiment, disassembly is performed with the use of an x86 disassembly library. Steps 320 to 340 aim to normalize the disassembled instruction, resulting in the generation of a same signature for variations and mutations of an executable code. Mutations may occur by the insertion of uninteresting instructions and by re-ordering the program code.

At block 320, the signature system determines if the current instruction is an uninteresting instruction. An uninteresting instruction is an instruction that would not alter program control flow logic if it were to be removed. For example, a NOP (no operation) instruction is uninteresting. In the Intel x86 instruction set, a NOP instruction is denoted by opcode 0x90.

If the current instruction is uninteresting, processing continues to block 340, where the current instruction is selectively omitted from the sigsource. Upon determining the current instruction as an uninteresting instruction, the current instruction is not emitted/appended into the sigsource. As shown in block 340, the IP is incremented to point to a next instruction by adding an instruction length to the current value of the IP. Processing then continues to block 345, which is described below.

At block 320, if the current instruction is not uninteresting, processing continues to block 325. At block 325, the signature system normalizes any re-ordering that may have occurred to the program code by branch unrolling. The signature system determines if the current instruction is a selective branch condition. Certain branch instructions (or jump instructions) are followed. At block 330, when the program code contains these arbitrary branches, the signature system sets the IP to the target instruction of the selective branch instruction.

In one embodiment, a relative near jump instruction is a selective branch instruction. In the Intel x86 instruction set, a relative near jump instruction is denoted by opcode $0 \times E9$ with a 1-byte relative offset parameter. Upon decoding of a selective branch condition, such as a relative near jump, the instruction mnemonic is not emitted/appended to the sigsource. Rather, the IP is incremented to the target instruction of the selective branch condition. Where the current instruction is a relative near jump, for example, the 1-byte relative offset specified in the jump instruction and the instruction length of 2-bytes is added to the instruction pointer.

At block 325, if the instruction is not a selective branch condition and is not an uninteresting instruction, processing continues to block 335, where the current instruction is emitted in mnemonic form, thereby being appended to the sigsource. At block 340, the instruction pointer is updated to point to a next instruction. Accordingly, the instruction pointer is incremented by the instruction length.

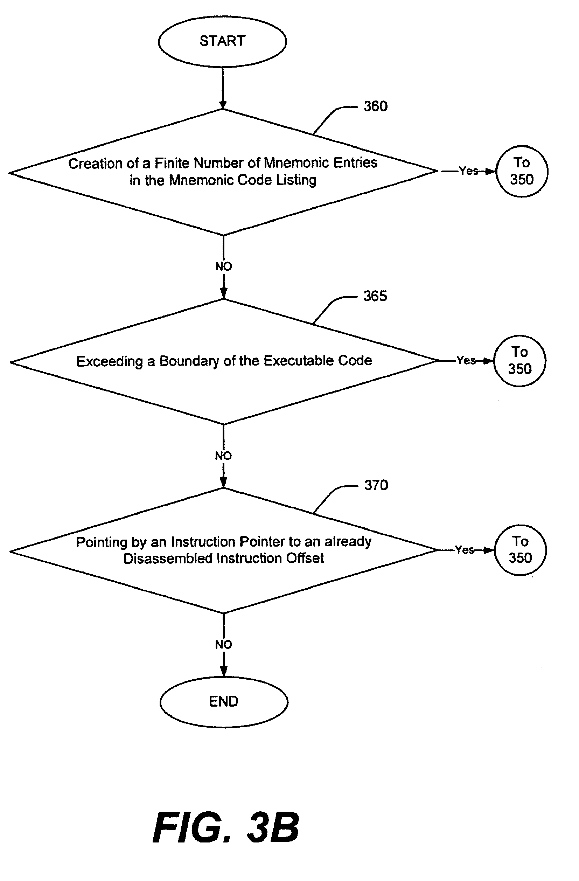

At block 345, the above extraction process is repeated until an end-extraction condition is satisfied. **FIG. 3B** is a flow diagram of an embodiment of a process by which an end condition terminates the creation of entries in the mnemonic code listing/sigsource list. At block 360, a first condition is the creation of a finite number of mnemonic entries in the mnemonic code listing. For one embodiment, the finite number of mnemonic entries is 1024 emissions. As programs become more complex, however, the average program code size will increase over time. Accordingly, the finite number of mnemonic entries is a configurable setting and should not be limited to the embodiment presented herein. An uninteresting instruction is not counted as part of an instruction emission limit. If the first condition is satisfied, an end-emission condition is satisfied at block 345 and processing continues to block 350 of FIG. 3A.

At block 365, a second condition is exceeding a boundary of the executable code. At block 305 of FIG. 3A, the lower and upper boundaries for disassembly addresses were set. As previously mentioned, if these boundaries are crossed by the IP, sigsource extraction stops. If the second condition is satisfied, processing continues to block 350.

At block 370, a third condition is pointing by an instruction pointer to an already disassembled instruction. For example, during branch unrolling at step 330 of FIG. 3A, the selective branch may point back into a portion of code, for example, in a loop. Where the branch target has already been disassembled, all extraction is stopped and processing continues to block 350 of FIG. 3A. If an end condition is not satisfied, processing continues to block 315 of FIG. 3A.

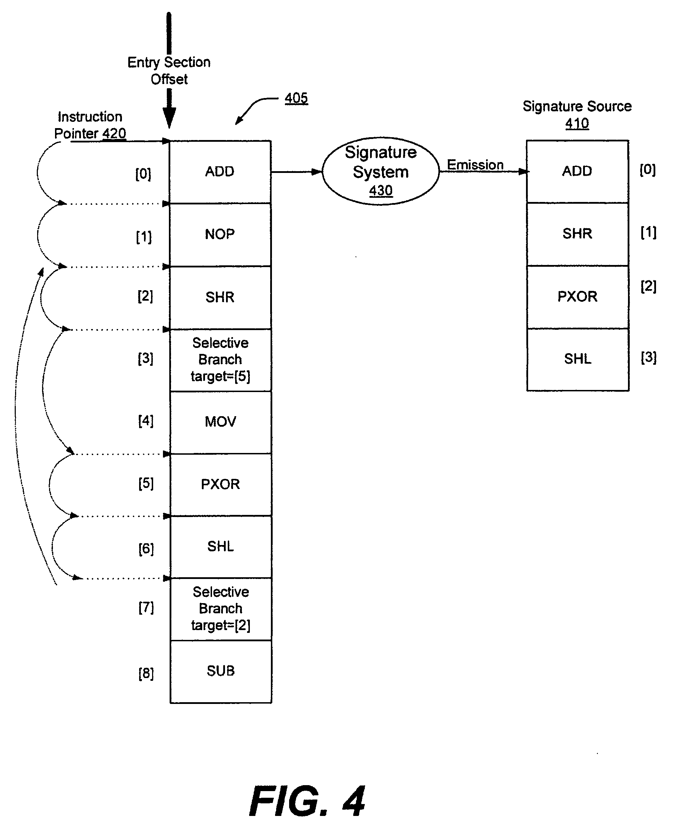

FIG. 4 illustrates one embodiment of the present invention for extracting a signature source. An exemplary entry section 405 including various instructions are listed. The instructions [0...8] are in binary code, but are illustrated in a human-readable mnemonic form for explanation purposes. An exemplary signature source 410 is also illustrated.

An instruction pointer ("IP") 420 points to a current instruction [0] within the entry section. The signature system 430 disassembles the current instruction [0] to an ADD instruction. In one embodiment, the ADD instruction is not an uninteresting instruction and is not a selective branch instruction. The ADD instruction is emitted, or appended, in mnemonic form to the sigsource 410 and the IP is incremented to point to current instruction [1]. Because an end-emission condition is not satisfied, the signature system 430 disassembles current instruction [1] into a NOP instruction. In one embodiment, the NOP is uninteresting and the IP is incremented to point to current instruction [2]. Because an end-emission condition is not satisfied, the signature system 430 disassembles current instruction [2] into an SHR (shift logical right) instruction. In one embodiment, the SHR is not uninteresting and is not a selective branch. The SHR instruction is emitted to the sigsource 410 and the IP is incremented to point to instruction [3]. Because an end-emission condition is not satisfied, the signature system 430 disassembles current instruction [3] into a branch with target instruction [5]. In one embodiment, instruction [3] is not uninteresting, but is found to be a selective branch. The IP is set to the target instruction [5]. Because an end-emission condition is not satisfied, the signature system 430 disassembles current instruction [5] into a PXOR instruction. In one embodiment, the PXOR is not uninteresting and is not a selective branch. The PXOR instruction is emitted to the sigsource 410 and the IP is incremented to point to the next instruction [6]. In one embodiment, an end-emission condition is not met, and the current instruction [6], an SHL (shift logical left) instruction, is neither uninteresting nor a selective branch. Accordingly, the SHL is emitted to the sigsource 410 and the IP is incremented to point to instruction [7].

Instruction [7] illustrates an end condition to terminate emission of instructions to the sigsource 410. The signature system 430 determines that instruction [7] points to instruction [2], which has previously been disassembled. Accordingly, the third end-emission condition 370 is satisfied, and processing continues to signature generation using the extracted sigsource 410.

In FIG. 3A, upon the satisfaction of and end-extraction condition, processing continues to block 350. Block 350 marks the start of signature generation, where the mnemonic code listing/ sigsource, is processed. In particular, the extracted sigsource is re-assembled into binary and a hash function is applied to the binary sigsource. In one embodiment, an SHA-1 hash is applied. Those skilled in the art would readily appreciate that any cryptographic hash function may be applied, such as, Message Digest algorithm 5 ("MD5"), SHA-0, SHA-1, SHA-2, MD2, MD4, MD5, RIPEMD-160, HAVAL, Snefru, Tiger, and Whirlpool.

At block 355, if the hash result is longer than the level of precision necessary to generate a signature of the executable, the hash result is truncated to the requisite level of precision. In one embodiment, the hash result is truncated to 20 bytes. The truncated hash result is the signature of the executable. If the hash result is of the requisite level of precision, the hash result is the signature of the executable.

For one embodiment, the generated signatures, as presently described, are stored among other signatures in one or more databases. The signatures may be analyzed to classify the executable code into one of a set of predetermined categories. Based on a comparison of the signature of an executable file against the signatures in the databases, a processing logic determines whether the executable signature matches an entry in the databases. If there is a match, processing logic identifies the executable as an executable of a first category. The first category may be a malicious code (i.e., malware) category. Other examples of categories include spyware, internal/proprietary software, commercial software, and obfuscated/hardened software. For one embodiment, processing logic blocks the identified executable. Alternatively, processing logic may tag the identified executable or put the executable into a predetermined location. If there is no match, processing logic may pass the executable.

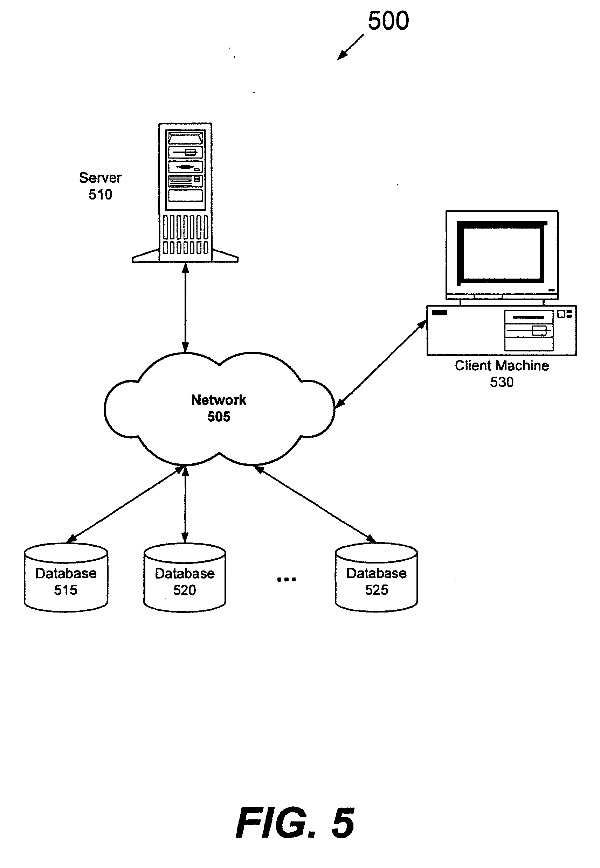

Figure 5 illustrates an electronic communication system implementing an embodiment of the present invention. The system 500 includes a network 505, an electronic communication server 510, a client machine 530, and databases 515-525. The electronic communication server 510 is coupled to the client machine 530 through the network 505. The client machine 530 may include a personal computer. A plurality of databases are coupled to the network 505.

For one embodiment, the signature system as described herein is implemented within the client machine 530. For another embodiment, the signature system is implemented on the electronic communication server 510. Note that the signature system 530 may be implemented by hardware (e.g., a dedicated circuit), software (such as is run on a general-purpose machine), or a combination of both.

The present description also relates to an apparatus for performing the operations described herein. This apparatus may be specially constructed for the required purposes, or it may comprise a general-purpose computer selectively activated or reconfigured by a computer program stored in the computer. Such a computer program may be stored in a computer readable storage medium, such as, but is not limited to, any type of disk including floppy disks, optical disks, CD-ROMs, and magnetic-optical disks, read-only memories (ROMs), random access memories (RAMs), EPROMs, EEPROMs, magnetic or optical cards, or any type of media suitable for storing electronic instructions, and each coupled to a computer system bus.

A machine-accessible medium includes any mechanism for storing or transmitting information in a form readable by a machine (e.g., a computer). For example, a machine-readable medium includes read only memory ("ROM"); random access memory ("RAM"); magnetic disk storage media; optical storage media; flash memory devices; electrical, optical, acoustical or other form of propagated signals (e.g., carrier waves, infrared signals, digital signals, etc.); etc.

The foregoing discussion merely describes some exemplary embodiments of the present invention. One skilled in the art will readily recognize from such discussion, the accompanying drawings, and the claims that various modifications can be made without departing from the spirit and scope of the invention.

**Claims**

**1.** A computerized method comprising:

determining an entry address for executable code;
stepping through the executable code, starting at the entry address;
discarding a first type of instruction;
following but discarding at least one type of branch instruction;
creating a mnemonic code listing by emitting into mnemonic form instructions not discarded until an ending condition is reached;
processing the mnemonic code listing to create a signature associated with the executable code; and
analyzing the signature to classify the executable code into one of a set of predetermined categories.

**2.** The computerized method of claim 1, wherein the executable code is part of a digital program and the signature is further associated with the digital program.

**3.** The computerized method of claim 1, wherein processing the mnemonic code listing comprises hashing the mnemonic code listing.

**4.** The computerized method of claim 3, wherein the hashing further comprises SHA-1 hashing.

**5.** The computerized method of claim 1, wherein the first type of instruction comprises a no-operation instruction.

**6.** The computerized method of claim 1, wherein the at least one type of branch instruction comprises a relative near jump instruction.

**7.** The computerized method of claim 1, wherein the ending condition comprises a first of either

(a) a creation of a finite number of mnemonic entries in the mnemonic code listing;
(b) an exceeding of a boundary of the executable code; or
(c) a pointing by an instruction pointer to an already disassembled instruction offset.

**8.** The computerized method of claim 7, wherein the finite number of mnemonic entries is 1,024.

**9.** The computerized method of claim 1, wherein a first category of the set of predetermined categories is malicious code.

**10.** A machine-readable medium having executable instructions to cause a processor to perform a method comprising:

determining an entry address for executable code;
stepping through the executable code, starting at the entry address;
discarding a first type of instruction;
following but discarding at least one type of branch instruction;

creating a mnemonic code listing by emitting into mnemonic form instructions not discarded until an ending condition is reached;

processing the mnemonic code listing to create a signature associated with the executable code; and

analyzing the signature to classify the executable code into one of a set of predetermined categories.

11. The machine-readable medium of claim 10, wherein the executable code is part of a digital program and the signature is further associated with the digital program.

12. The machine-readable medium of claim 10, wherein processing the mnemonic code listing comprises hashing the mnemonic code listing.

13. The machine-readable medium of claim 12, wherein the hashing further comprises SHA-1 hashing.

14. The machine-readable medium of claim 10, wherein the first type of instruction comprises a no-operation instruction.

15. The machine-readable medium of claim 10, wherein the at least one type of branch instruction comprises a relative near jump instruction.

16. The machine-readable medium of claim 10, wherein the ending condition comprises a first of either

(a) a creation of a finite number mnemonic entries in the mnemonic code listing;
(b) an exceeding of a boundary of the executable code, or
(c) a pointing by an instruction pointer to an already disassembled instruction offset.

17. A computerized method comprising:

(a) determining an entry section offset that points to executable code of a digital file;
(b) initializing an instruction pointer to the entry section offset;
(c) if a current instruction is not a first type of branch instruction, then updating the instruction pointer to a next instruction;
(d) if the current instruction is a branch instruction of the first type, then updating the instruction pointer with an offset contained in the branch instruction;
(e) repeating (c) and (d);
(f) creating a list of emissions by disassembling instructions pointed to by the instruction pointer that are not uninteresting instructions or branch instructions of a first type;
(g) terminating operations once a termination point is reached;
(h) hashing the list of emissions to create a signature associated with the digital file.

18. The computerized method of claim 17, wherein the emissions comprise mnemonic code.

19. The computerized method of claim 17, wherein the uninteresting instructions comprise no-operation instructions and the first type of branch instruction comprises a relative near jump instruction.

20. The computerized method of claim 17, wherein the termination point comprises a first of either:

(a) reaching a finite number emissions in the list of emissions;
(b) exceeding a boundary of the executable code, or
(c) having the instruction pointer point to an already-disassembled instruction offset.

EP 1 762 957 A1

| 28 | 20 | L₁ | 40 | 40 | 40 |

| | PE Offset | | L₁ | | vaddr LOAD | size S₁ | vaddr LOAD | size S₂ | vaddr LOAD | size S₃ | |

| MZ | PE | PE Optional | SH 1 | SH 2 | SH 3 | Main Body |
| 105 | 110 | 115 | 120 | 125 | 130 | 135 |

x00

x3C

| S₁ | S₂ | S₃ |

| Section 1 | Section 2 | Section 3 |

Offset

SH1(vaddr)

SH2(vaddr)

SH3(vaddr)

## FIG. 1

START

Input is a Valid Executable? —205 —NO→ Return Error [END]

YES

Input length valid? —210 —NO→ Return Error [END]

YES

Read PE offset integer value comprising 32 bits beginning at offset 0x3C of input —215

PE Offset = 0 →

Entry Point = File Offset (MZ Header (ip )) —220

to B

PE Offset !=0

Executable includes a valid PE Offset and valid PE Header? —225 —NO→ Return Error [END]

YES

PE Header(optlength ) >= PE optional header structure? —230 —NO→ Return Error [END]

YES

to A

## FIG. 2A

A

Copy PE Optional Header — 235

PE Header (sections) > 0 ? — 240 — NO→ Return Error [END]

Yes

Calculate PE Section Header offset — 245

Copy PE Section Headers — 250

PE Section Header where PE section header (vaddr + size) > Entry Point >= PE section header (vaddr) is located? — 255 — NO→ Return Error [END]

Yes

Mark PE Section Header as the Entry Section — 256

Calculate the File Offset where file offset = Entry Section(offset) + entry point - Entry Section(vaddr) — 260

to B

*FIG. 2B*

B

Set Lower Boundary (LB) and Upper Boundary (UB)
for Disassembly where: LB = Entry Section (offset)
UB = Entry Section (offset + size) — 305

Initialize the Instruction Pointer (IP)
IP = Entry Section (offset) — 310

Disassemble a Current Instruction — 315

The Current Instruction
is Uninteresting? — 320

Yes

NO

The Current Instruction
is a Selective Branch Condition? — 325

NO

Yes

Emit the Current Instruction to Sigsource — 335

Set the IP to point to a Branch Target — 330

Increment IP to point to a Next Instruction — 340

An End-Emission
Condition is Satisfied? — 345

NO

Yes

Apply Hash to the Signature
Source — 350

Truncate Hash Result — 355

END

*FIG. 3A*

START

Creation of a Finite Number of Mnemonic Entries
in the Mnemonic Code Listing — 360 —Yes→ To 350

NO

Exceeding a Boundary of the Executable Code — 365 —Yes→ To 350

NO

Pointing by an Instruction Pointer to an already
Disassembled Instruction Offset — 370 —Yes→ To 350

NO

END

# FIG. 3B

**FIG. 4**

500

Server
510

Network
505

Client Machine
530

Database
515

Database
520

• • •

Database
525

**FIG. 5**

**European Patent Office**

**EUROPEAN SEARCH REPORT**

Application Number

EP 06 25 4754

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHRISTODORESCU M ET AL: "Semantics-Aware Malware Detection" SECURITY AND PRIVACY, 2005 IEEE SYMPOSIUM ON OAKLAND, CA, USA 08-11 MAY 2005, PISCATAWAY, NJ, USA,IEEE, 8 May 2005 (2005-05-08), pages 32-46, XP010798362 ISBN: 0-7695-2339-0 * page 1, right-hand column, paragraph 1 * * page 2, left-hand column, paragraph 3 * * page 3, left-hand column; figure 1 * * page 5, left-hand column, paragraph 5 - page 6, right-hand column, paragraph 2; figure 2 * * page 8, right-hand column - page 10, left-hand column, paragraph 1 * * page 11, right-hand column, paragraph 2 - page 12, right-hand column * ----- | 1-20 | INV. G06F21/00 |
| Y | US 2005/172338 A1 (SANDU CATALIN D [US] ET AL) 4 August 2005 (2005-08-04) * paragraphs [0004] - [0006], [0035], [0058] - [0060], [0066], [0067], [0070] * ----- | 1-20 | TECHNICAL FIELDS SEARCHED (IPC) G06F |
| Y | US 2004/172551 A1 (FIELDING ALEX [US] ET AL) 2 September 2004 (2004-09-02) * abstract * * paragraphs [0016] - [0025], [0043] * ----- | 1-20 | |
| A | US 6 851 057 B1 (NACHENBERG CAREY S [US]) 1 February 2005 (2005-02-01) * column 1, line 66 - column 2, line 36 * * column 5, lines 1-67; figure 1 * * column 6, line 65 - column 7, line 35; figure 4 * * column 8, lines 31-44 * ----- | 1-20 | |

-/--

The present search report has been drawn up for all claims

| Place of search | Date of completion of the search | Examiner |
|---|---|---|
| Munich | 23 January 2007 | Preuss, Norbert |

EPO FORM 1503 03.82 (P04C01)

**European Patent Office**

**EUROPEAN SEARCH REPORT**

Application Number

EP 06 25 4754

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2002/144140 A1 (ELLISON CARL M [US] ET AL) 3 October 2002 (2002-10-03) * paragraphs [0016], [0037]; claim 1 * | | |
| A | US 2005/091528 A1 (DEBAR HERVE [FR] ET AL) 28 April 2005 (2005-04-28) * page 1, paragraph 7-11 * * page 3, paragraph 45 * | | |

TECHNICAL FIELDS
SEARCHED     (IPC)

The present search report has been drawn up for all claims

| Place of search | Date of completion of the search | Examiner |
|---|---|---|
| Munich | 23 January 2007 | Preuss, Norbert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 25 4754

This annex lists the patent family members relating to the patent documents cited in the above-mentioned European search report.
The members are as contained in the European Patent Office EDP file on
The European Patent Office is in no way liable for these particulars which are merely given for the purpose of information.

23-01-2007

| Patent document cited in search report | | Publication date | Patent family member(s) | | Publication date |
|---|---|---|---|---|---|
| US 2005172338 | A1 | 04-08-2005 | NONE | | |
| US 2004172551 | A1 | 02-09-2004 | NONE | | |
| US 6851057 | B1 | 01-02-2005 | NONE | | |
| US 2002144140 | A1 | 03-10-2002 | NONE | | |
| US 2005091528 | A1 | 28-04-2005 | AT | 288596 T | 15-02-2005 |
| | | | DE | 60202887 D1 | 10-03-2005 |
| | | | DE | 60202887 T2 | 14-07-2005 |
| | | | EP | 1433045 A1 | 30-06-2004 |
| | | | ES | 2235115 T3 | 01-07-2005 |
| | | | FR | 2830638 A1 | 11-04-2003 |
| | | | WO | 03032134 A1 | 17-04-2003 |

EPO FORM P0459

For more details about this annex : see Official Journal of the European Patent Office, No. 12/82